# EUROPÄISCHE PATENTSCHRIFT

(11) **EP 1 574 776 B1**
(45) Veröffentlichungstag und Bekanntmachung des Hinweises auf die Patenterteilung: **22.08.2007**
(21) Anmeldenummer: 05001176.6
(22) Anmeldetag: 21.01.2005
(51) Int. Cl.: F16P 3/14, G01V 8/20

(54) **Schutzeinrichtung, insbesondere Lichtgitter**
Safety device, particularly light curtain
Dispositif de protection, en particulier barrière lumineuse

(30) Priorität: 11.03.2004 DE 202004003810 U
(43) Veröffentlichungstag der Anmeldung: 14.09.2005
(73) Patentinhaber: SICK AG, 79183 Waldkirch (DE)
(72) Erfinder: Friedrich, Ralf, 79426 Buggingen (DE)
(74) Vertreter: Ludewigt, Christoph

(56) Entgegenhaltungen:
- EP-A- 1 180 697
- DE-U1-0202004 003 81
- FR-A- 2 658 588
- GB-A- 2 364 773
- US-A- 2 694 775
- US-A- 5 210 406

## Beschreibung

Die Erfindung betrifft eine Schutzeinrichtung, ein Lichtgitter nach dem Oberbegriff des Anspruchs 1.

Derartige Lichtgitter werden verwendet, um Zugangsbereiche zum Beispiel an gefahrbringenden Werkzeugmaschinen zu überwachen.

Die bekannten Lichtgittern dieser Art arbeiten entweder nach dem Einwegprinzip oder nach dem Reflexionsprinzip. Beim Einwegprinzip ist in einem ersten Gehäuse auf einer Seite eines zu überwachenden Schutzbereiches die Lichtsendereinheit angeordnet. In einem zweiten Gehäuse auf der gegenüberliegenden Seite des Schutzbereiches befindet sich die Lichtempfängereinheit. In der Lichtsendereinheit sind ein oder mehrere Lichtsender die mit einem oder mehreren Lichtempfänger in der Lichtempfängereinheit kommunizieren.

Beim Lichtgitter nach dem Reflexionsprinzip sind in einem Gehäuse auf einer Seite des Schutzbereiches sowohl die Lichtsendereinheit als auch die Lichtempfängereinheit eingebaut. Dabei wird das von der Lichtsendereinheit ausgesandte Licht von einer Reflektoreinheit am Ende des Zugangsbereiches zurückreflektiert und somit der Lichtempfängereinheit zugeführt.

Der Begriff "Licht" ist hierbei nicht auf das sichtbare Licht beschränkt. Unter dem Begriff "Licht" sind ganz allgemein jene elektromagnetischen Strahlen zu verstehen, die üblicherweise für den Betrieb von Lichtschranken und Lichtgittern eingesetzt werden, also vom UV-Licht über den sichtbaren Bereich bis zum IR-Licht.

Weiterhin ist es bei derartigen Lichtgittern bekannt, die Anzahl der den Zugangsbereich durchstrahlenden Lichtstrahlen sowie den Abstand der Lichtstrahlen zueinander in Abhängigkeit von der Aufgabenstellung zu variieren. Dies bedeutet, dass hinsichtlich der Baulänge der Lichtgittergehäuse eine sehr große Varianz auftritt. Es ist deshalb nach dem Stand der Technik bekannt, dass diese Lichtgittergehäuse aus einem Hohlkörperprofil, das beispielsweise in Strangpresstechnik hergestellt wurde, gefertigt werden. Dazu wird eine bestimmte Länge aus einem in der Regel mehreren Meter langen Hohlkörperprofil herausgetrennt und an den beiden Stirnseiten mit speziellen Endkappen verschlossen.

Nachteilig bei der Herstellung dieser Lichtgittergehäuse nach dem bekannten Stand der Technik ist es, dass das Hohlkörperprofil unter Zuhilfenahme von bis zu vier Schrauben an den beiden Stirnseiten mit den Endkappen verschlossen werden muss. Dieser Montagevorgang ist sehr zeitaufwendig und kostenintensiv. Der Grund dafür sind nicht nur die angesprochenen Schrauben, sondern vielmehr die Tatsache, dass der gesamte Montageprozess in verschiedene Richtungen an mehreren Seiten des Werkstückes durchgeführt werden muss. Dies erfordert in der Regel bei großen Lichtgittern aufwendige Montagevorrichtungen mit Spanneinrichtungen, Drehmomentschraubendrehen usw.

Aus der EP 1 180 697 A1 ist ein Lichtgitter nach dem Oberbegriff des Anspruchs 1 bekannt.

Aus der GB 2 364 773 A ist ein weiteres Lichtgitter bekannt, bei dem die Endkappen auf die Enden eines Hohlprofils aufgepresst sind.

Aus der US 2,694,775 ist eine Deckenleuchte bekannt, bei der eine durchsichtige Abdeckung mittels seitlich aufsteckbarer Endkappen gehalten ist, und aus der FR 2 658 588 A1 ist eine weitere Deckenleuchte bekannt, bei der Endkappen mit Schrauben an drei verschiedenen Seiten an ein Gehäuse montiert sind.

Der Erfindung liegt die Aufgabe zugrunde, die Verbindung der Endkappen mit dem Hohlprofilkörper derart auszuführen, dass dieser Montagevorgang von der gleichen Längsseite des Hohlprofilkörpers ausgeführt werden kann, die auch für den Einbau der elektrischen -, optischen - und mechanischen Komponenten, welche zur Funktion des Lichtgitters erforderlich sind, benutzt wird.

Erfindungsgemäß wird die Aufgabe mit den Merkmalen gemäß Anspruch 1 gelöst. Zweckmäßige Ausgestaltungen und Weiterbildungen sind in den Unteransprüchen charakterisiert.

Ein wesentlicher Vorteil des erfindungsgemäßen Lichtgitters besteht darin, dass durch das von einer Längsseite montierbare Montagemittel die Endkappe mit dem Hohlprofilkörper verbunden werden kann, wobei die Bearbeitungsrichtung die gleiche sein kann, wie die zur Montage der elektrischen -, optischen - und mechanischen Komponenten des Lichtgitters. Dadurch kann wesentlicher Aufwand und Zeit eingespart werden.

Dabei ist das Montagemittel als ein zylinderförmiger Fangstift, der ggf. mit einer kegelstumpfförmigen Spitze versehen ist, ausgebildet. Dies hat beispielsweise gegenüber einer Schraubverbindung den Vorteil, dass sowohl in dem Hohlprofilkörper als auch in der Endkappe keine mit einem Gewinde versehenen Löcher, sondern nur zylindrische Positionsbohrungen vorhanden sein müssen und dass zum Einfügen des Fangstiftes nur eine lineare Bewegung notwendig ist, die bei Bedarf von einem sehr preiswerten, einfachen Arbeitszylinder ausgeführt werden kann.

Weiter ist vorgesehen, dass zur Montage der Lichtgitterkomponenten und insbesondere für das Einbringen der Montagemittel zur Befestigung der Endkappen am Hohlprofilkörper die Lichtaustritts- und/oder Lichteintrittseite des Hohlprofilkörpers verwendet wird. Durch die Benutzung dieser Längsseite des Hohlprofilkörpers, die zur Funktion des Lichtgitters zwangsläufig aus einer getrennten, optisch transparenten Abdeckscheibe bestehen muss, braucht keine weitere zusätzliche Öffnung im Hohlprofilkörper angebracht werden, was sich in den Herstellkosten des Lichtgitters positiv auswirkt.

Gemäß einer besonderen Ausführungsform ist es vorgesehen, den Fangstift so zu dimensionieren, dass er dann, wenn die Abdeckscheibe auf dem Hohlprofilkörper aufgebracht wurde, in seiner Position gesichert ist. Dadurch kann sich auch beim Einsatz des Lichtgitters unter rauen Umweltbedingungen, die zum Beispiel durch Schock- und Vibrationsbelastung hervorgerufen werden, der Fangstift in seiner Position nicht verändern. Mit einer derartig abgestimmten Formgebung des Fangstiftes werden weitere Sicherungsmaßnahmen, wie zum Beispiel das Anbringen von Sicherungslack oder dergleichen, überflüssig.

Eine unter Kostengesichtspunkten optimierte Variante sieht vor, dass der Fangstift mit dem die Längsseite verschließenden Teil, also beispielsweise mit der Abdeckscheibe verbunden ist. Auf diese Weise wird erreicht, dass zum Verschluss mit der Abdeckscheibe und zur Befestigung der Endkappen mit dem Hohlprofilkörper nur ein Fertigungsschritt notwendig ist.

In einer zweckmäßigen Weiterbildung ist es vorgesehen, dass wenigstens eine der Endkappen des Lichtgitters so ausgeführt ist, dass in deren Innenbereich ein elektrischer Anschlussraum für das Lichtgitter vorgesehen ist. Dies hat den Vorteil, dass mit der erfindungsgemäßen Befestigung der Endkappen an dem Hohlprofilkörper gleichzeitig und ohne zusätzliche Montagemittel die Anschlusseinheit für die elektrischen Versorgungs- und Datenleitungen am Lichtgittergehäuse angebracht sind.

Im Folgenden wird die Erfindung an Hand von Ausführungsbeispielen unter Bezugnahme auf die Zeichnungen im Einzelnen erläutert. In der Zeichnung zeigen:
- Figur 1: eine perspektivische Darstellung eines Lichtgittergehäuses,
- Figur 2: einen Querschnitt durch ein Hohlkörperprofil des Lichtgittergehäuses gemäß Fig. 1 im Schnitt (A-A),
- Figur 3: einen Ausschnitt des Lichtgitters in Explosionsdarstellung.

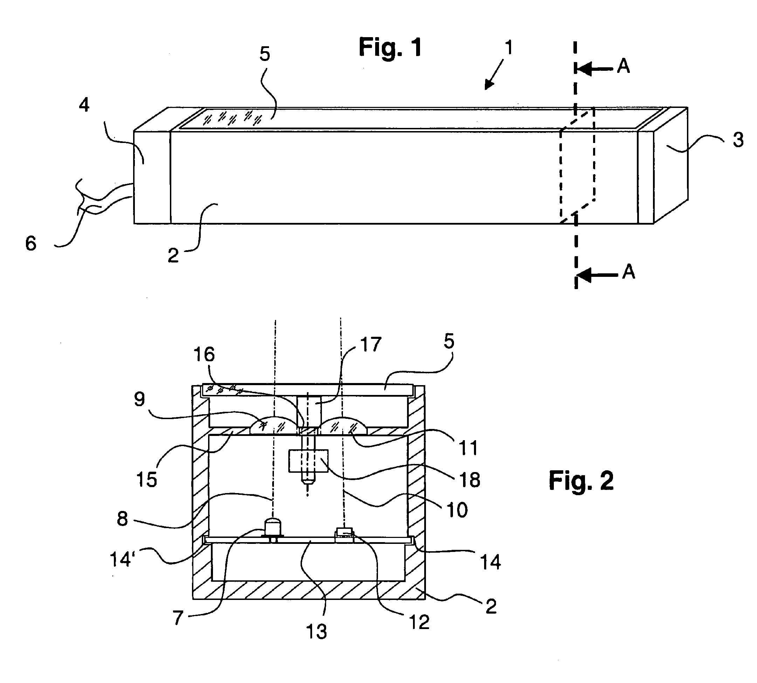

Die Figur 1 zeigt ein Lichtgittergehäuse 1 mit einem Hohlprofilkörper 2. An Stirnseiten sind am Hohlprofilkörper 2 zwei Endkappen 3 und 4 angebracht. Eine Längsseite des Hohlprofilkörpers 2 ist durch eine Abdeckscheibe 5 abgeschlossen. In den Figuren ist dies die Oberseite. Da die Abdeckscheibe 5 an der Längsseite des Hohlprofilkörpers 2 als Lichtaustritts- und/oder Lichteintrittseite des Lichtgitters genutzt wird, ist die Abdeckscheibe 5 aus einem optischen Material hergestellt, das eine hohe optische Transparenz für die in dem Lichtgitter verwendeten Lichtstrahlen aufweist. Über die eine Endkappe 4 wird eine zum Betrieb des Lichtgitters notwendige elektrische Versorgungs- und Datenleitung 6 zugeführt.

In der Figur 2 sind in einer Querschnittszeichnung entlang der Schnittlinie A-A aus Fig. 1 das Hohlkörperprofil 2 sowie eine Lichtsender- und Lichtempfängereinheit ersichtlich. Die Lichtsendereinheit besteht aus einem Lichtsender 7 und einer auf einer optischen Sendeachse 8 angeordneten Sendeoptik 9. Analog dazu sind entlang einer optischen Empfangsachse 10 eine Empfangsoptik 11 und ein Lichtempfänger 12 ausgerichtet. Das vom Lichtsender 7 abgestrahlte und von der Sendeoptik 9 in seiner Ausbreitungsrichtung bestimmte Sendelicht tritt im Bereich der Sendeachse 8 durch die Abdeckscheibe 5 aus dem Hohlprofilkörper 2 aus. Ebenso empfängt die Empfangsoptik 11 Licht, das im Bereich um die Empfangsachse 10 einfällt und fokussiert dieses auf dem Lichtempfänger 12.

Der Lichtsender 7 und der Lichtempfänger 12 sind neben weiteren, nicht im Einzelnen dargestellten elektrischen Bauelementen auf einer Leiterplatte 13 aufgebracht. Die Leiterplatte 13 ist mittels zwei im Hohlprofilkörper 2 eingelassenen Nuten 14 und 14' gehalten. Im Hohlprofilkörper 2 ist parallel zur Abdeckscheibe 5 ein Verbindungssteg 15 angebracht. Der Verbindungssteg 15 ist zur Aufnahme der Sendeoptik 9 und der Empfangsoptik 11 durch Bohrungen unterbrochen.

In unmittelbarer Nähe vom stirnseitigen Ende des Hohlprofilkörpers 2 ist im Verbindungssteg 15 eine Positionsbohrung 16 eingebracht, in welche ein Fangstift 17 eingeschoben ist. Da die Positionsbohrung 16 im Verbindungssteg 15 so positioniert ist, dass diese mit einer an der Endkappe 4 angebrachten und in den Hohlprofilkörper 2 hineinreichenden Fangstiftaufnahme 18 fluchtet, wird über den Fangstift 17 die Endkappe 4 mit dem Hohlprofilkörpers 2 verbunden.

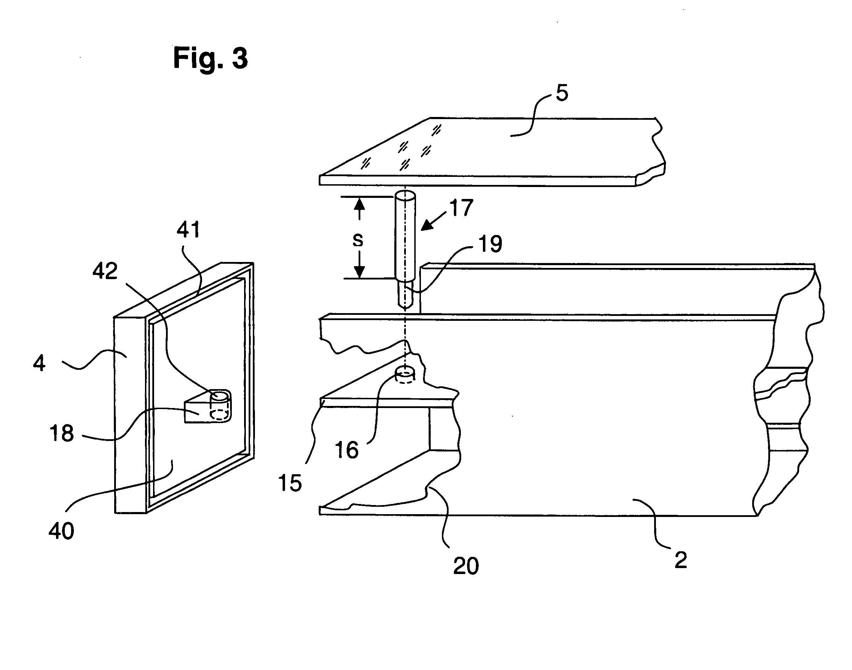

Die perspektivische Darstellung in Fig. 3 zeigt einen Ausschnitt des Lichtgitters in einer Explosionsdarstellung. Dabei ist eine Seitenwand des Hohlprofilkörpers 2 im Bereich 20 aufgebrochen, um die Positionsbohrung 16 im Verbindungssteg 15 besser darstellen zu können. In der Endkappe 4 ist auf der Innenseite 40 eine umlaufende Zentriernut 41 angebracht, welche so auf den Querschnitt des Hohlprofilkörpers 2 abgestimmt ist, dass beim Zusammenfügen eine formschlüssige Zentrierung der Endkappe 4 mit dem Hohlprofilkörper 2 stattfindet. Diese hier beispielhaft dargestellte Maßnahme zur Zentrierung der Endkappe 4 mit dem Hohlprofilkörper 2 kann auch mittels anderer, nach dem Stand der Technik bekannten Maßnahmen, wie zum Beispiel durch Führungszapfen oder Zentrieransätzen, erfolgen. Auf der Innenseite 40 der Endkappe 4 ist die Fangstiftaufnahme 18 sichtbar. In der Fangstiftaufnahme 18 ist ebenfalls eine Positionsbohrung 42 enthalten, welche nach dem zentrierten Zusammenfügen der Endkappe 4 mit dem Hohlprofilkörper 2 exakt fluchtend unter der Positionsbohrung 16 im Verbindungssteg 15 angeordnet ist.

Der zylindrische Fangstift 17 hat einen Ansatz 19, welcher in seinem Durchmesser auf die Positionsbohrungen 16 und 42 abgestimmt ist und deshalb nach dem Zusammenfügen der Endkappe 4 mit dem Hohlprofilkörper 2 durch beide Positionsbohrungen 16 und 42 geschoben werden kann. Auf der Seite des Fangstiftes 17, die der Abdeckscheibe 5 zugewandt ist, hat der Fangstift über die Länge s einen größeren Durchmesser als im Bereich des Ansatzes 19 der in die Positionsbohrungen 16 und 42 eingreift. Damit ist sichergestellt, dass der Fangstift 17 nur so weit durch die Positionsbohrungen 16 und 42 geschoben werden kann, bis der durch den Durchmesserwechsel hervorgerufene Absatz des Fangstiftes 17 an dem Verbindungssteg 15 anliegt.

Um den Fangstift 17 in der eingeschobenen Stellung zu fixieren, ist die Länge s in dem der Fangstift einen größeren Durchmesser aufweist so dimensioniert, dass der Fangstift gerade bis an die Unterseite der aufgesetzten Abdeckscheibe 5 heranreicht. Dadurch ist sichergestellt, dass der Fangstift, sobald die Abdeckscheibe 5 am Hohlprofilkörper 2 angebracht wurde, sich nicht mehr verändern kann.

Es ist auch denkbar, dass der Fangstift 17 an der Abdeckscheibe 5 fest angeordnet ist. Dann wird beim Aufsetzen der Abdeckscheibe 5 im gleichen Arbeitsschritt gleichzeitig der Fangstift 17 in die Fangstiftaufnahme 18 geführt und so die Endkappe 4 verriegelt.

## Patentansprüche

1. Berührungslos wirkende, als ein Lichtgitter ausgeführte Schutzeinrichtung, mit wenigstens einer Lichtsendereinheit und/oder einer Lichtempfängereinheit in einem Gehäuse (2), das als Hohlprofilkörper (2) ausgebildet ist, wobei der Hohlprofilkörper (2) an wenigstens einer Stirnseite mit einer Endkappe (3, 4) abgeschlossen ist, **gekennzeichnet durch** ein von einer Lichtaustritts- und/oder Lichteintrittseite des Hohlprofilkörpers (2) montierbares Montagemittel (17) zur Verbindung der Endkappe (4) mit dem Hohlprofilkörper (2), wobei das Montagemittel (17) als Fangstift (17) ausgebildet ist.

2. Schutzeinrichtung nach Anspruch 1, **dadurch gekennzeichnet, dass** eine Abdeckscheibe (5) auf der Lichtaustritts- und/oder Lichteintrittseite des Hohlprofilkörpers (2) der eingefügte Fangstift (17) in der Position fixiert.

3. Schutzeinrichtung nach Anspruch 1, **dadurch gekennzeichnet, dass** der Fangstift (17) an dem die Längsseite verschließendem Teil (5) angeordnet ist.

4. Schutzeinrichtung nach einem der vorhergehenden Ansprüche, **dadurch gekennzeichnet, dass** in wenigstens einer Endkappe (4) ein elektrischer Anschlussraum vorgesehen ist.

## Claims

1. Contactlessly acting safety device arranged as a light curtain, comprising at least one light transmitter unit and/or light receiver unit in a housing (2) which is constructed as hollow section body (2), wherein the hollow section body (2) is closed with an end cap (3, 4) at at least one end face, **characterized by** an assembly means (17), which can be assembled from a light exit and/or light entry side of the hollow section body (2), for connecting the end cap (4) to the hollow section body (2), the assembly means (17) being constructed as capture pin (17).

2. Safety device according to Claim 1, **characterized in that** a cover disc (5) on the light exit and/or light entry side of the hollow section body (2) fixes the inserted capture pin (17) in position.

3. Safety device according to Claim 1, **characterized in that** the capture pin (17) is arranged on the part (5) closing the longitudinal side.

4. Safety device according to one of the preceding claims, **characterized in that** an electrical connection space is provided in at least one end cap (4).

## Revendications

1. Dispositif de protection agissant sans contact, réalisé sous la forme d'une grille lumineuse, comprenant au moins une unité émettrice de lumière et/ou une unité réceptrice de lumière dans un boîtier (2), qui est réalisé sous la forme de corps de profilé creux (2), le corps de profilé creux (2) étant fermé sur au moins une face frontale par un capuchon d'extrémité (3, 4), **caractérisé par** un moyen de montage (17) pouvant être monté par un côté de sortie et/ou d'entrée de lumière du corps de profilé creux (2) pour la liaison du capuchon d'extrémité (4) avec le corps de profilé creux (2), le moyen de montage (17) étant réalisé comme une goupille de capture (17).

2. Dispositif de protection selon la revendication 1, **caractérisé en ce qu'**un disque de recouvrement (5) fixe dans la position la goupille de capture (17) sur le côté de sortie et/ou d'entrée de lumière du corps de profilé creux (2).

3. Dispositif de protection selon la revendication 1, **caractérisé en ce que** la goupille de capture (17) est placée sur la partie fermante du côté longitudinal (5).

4. Dispositif de protection selon l'une quelconque des revendications précédentes, **caractérisé en ce que**, dans au moins un capuchon d'extrémité (4), il est prévu un local d'entrée des raccordements électriques.
